Europäisches Patentamt

European Patent Office

Office européen des brevets

(11) Publication number: **0 407 670 A1**

# EUROPEAN PATENT APPLICATION

(21) Application number: **89310782.1**

(22) Date of filing: **20.10.89**

(51) Int. Cl.5: **F02M 31/02, F02M 31/125**

(30) Priority: **14.07.89 US 380815**

(43) Date of publication of application:
**16.01.91 Bulletin 91/03**

(84) Designated Contracting States:
**AT BE CH DE ES FR GB GR IT LI LU NL SE**

(71) Applicant: **Huang, Kuo-Liang**
**2nd Floor, No. 27 Lane 51 Hsin Tung Street**
**Taipei(TW)**

(72) Inventor: **Huang, Kuo-Liang**
**2nd Floor, No. 27 Lane 51 Hsin Tung Street**
**Taipei(TW)**

(74) Representative: **Read, Matthew Charles et al**
**Venner Shipley & Co. 368 City Roadoad**
**London EC1V 2QA(GB)**

(54) **Fuel pipeline heater.**

(57) A diesel engine fuel pipeline heating device consists of an electric heating device (4) and a water (or air) temperature heating device (51) provided on the exterior of a diesel engine fuel pipe (7) that receives heat energy from engine (1). A diesel engine equipped with such a heating device can be easily started by using the electric heating device (4) to heat the fuel in the fuel pipe (7) up to a suitable starting temperature around 40° C (or 104° F) before starting the engine; and after starting the engine for some time, namely when the temperature in the heating cylinder of water (or air) temperature heating device (51) has risen to the said suitable temperature around 40° C (or 104° F), the power source of electric heating device (4) can be automatically turned off to stop the heating action; and then the hot water from the water return pipe of radiator or the hot air from the exhaust pipeline of exhaust pipe keeps continued preheating of fuel pipe to a constant temperature through the water (or air) temperature heating device so as to enhance fuel combustion, easily and smoothly start and run the engine, save fuel and enhance the horsepower of the engine.

FIG.1

EP 0 407 670 A1

## FUEL PIPELINE HEATER

The present invention relates to an engine fuel heating device, and particularly to a device for an engine fuel pipe.

Conventional vehicles or machine tools have not hitherto been equipped with a fuel pipeline heating device, so when starting a diesel engine in the cold winter or in countries and regions in the frigid zone such as those north of the United States in North America, north of England and Germany in Europe, and north of Japan in Asia, it is extremely difficult to start same or tends to run unsmoothly after starting. Some manufacturers have tried to install a heating device in the fuel tank; however, the volume of fuel tank in general is rather large, so heating the entire volume of the fuel in the tank to a suitable temperature (approximately 40° C, namely 104° F), takes a significant time, consumes substantial amounts of electric power and is uneconomical.

The present inventor, as a professional exporter of various automobile parts and components, has toured in the frigid zone north of the United States for developing business and has found that there is a problem in starting diesel engines in the said frigid zones and therefore invented an internal combustion engine fuel pipeline heating device.

An embodiment of a diesel engine fuel pipeline heating device according to the invention consists of an electric heating device and a water (or air) heating device provided to the exterior of diesel engine fuel pipe.The diesel engine equipped with such a device of the present invention can make the temperature of fuel in the fuel pipe rise to a suitable temperature for starting (approximately 40° C, i.e. 104° F) by means of the electric heating device prior to starting the engine, so it is easy to start same, and then the hot water from the water return pipe of radiator or hot air from the exhaust pipe maintains continued preheating of fuel pipe to a constant temperature through the water (or air) temperature heating device. Therefore, it is easy to start and run the engine smoothly, and can save fuel and enhance the horsepower of said engine.

In order that the invention may be more fully understood, embodiments thereof will now be described, by way of example only, with reference to the accompanying drawings, wherein:

Figure 1 is a schematic block diagram of a first example (i.e. water temperature heating device) of the present invention,

Figure 2 is a schematic block diagram of a second example (i.e. air temperature heating device) of the present invention, and

Figure 3 is a view of another example of water (or air) temperature heating device for use in the present invention.

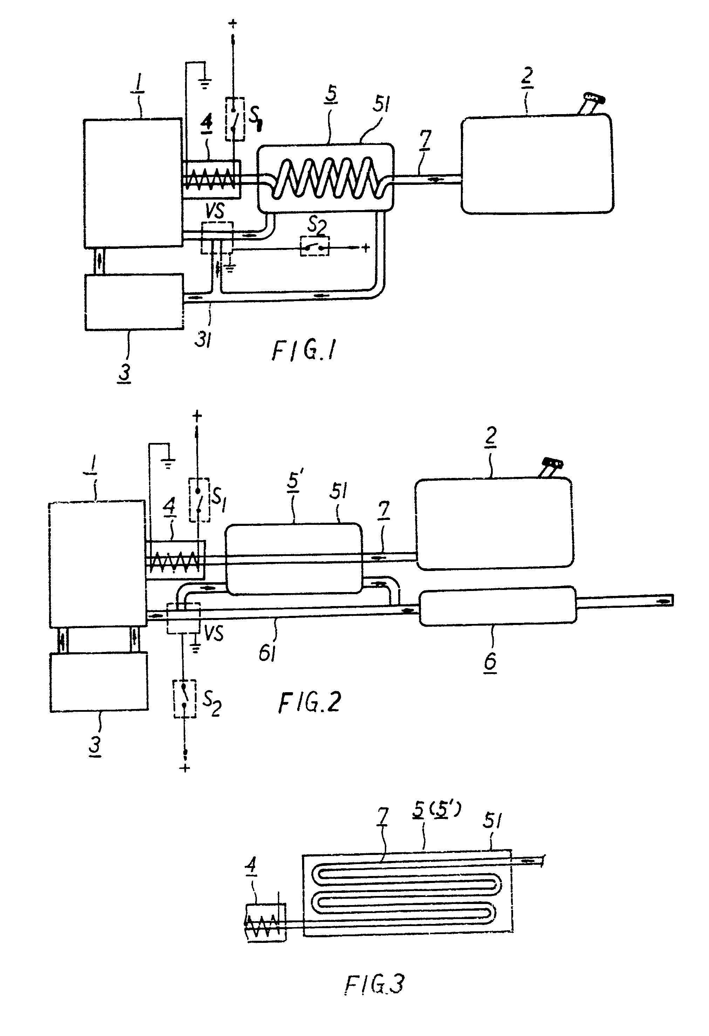

As shown in Figures 1 and 2, the present invention chiefly consists of an electric heating device 4 provided to the exterior of fuel pipe 7 nearby the engine 1 and between the engine 1 and the fuel tank 2, and a water (or air) temperature heating device 5 (or 5') (as shown in Figures 1 and 2 respectively) provided to the exterior of fuel pipe 7 behind the electric heating device 4. The electric heating device 4 is an electric heating wire or an electric heating piece or an electric heating pipe of which the inner and outer surfaces are covered with an insulating, chillproof and heatproof material and an automatic constant temperature (desirably set at 40° C, i.e. 104° F in general) control switch S1 is provided to the electric heating device 4. Before starting the engine 1, the constant temperature control switch S1 may be turned on so that the electric heating wire (or piece or pipe) of electric heating device 4 is powered to heat up the fuel in the fuel pipe 7 to about 40° C (104° F) and the engine 1 can easily be started; meantime, after starting the engine 1 for some time (about 2-3 minutes) when the temperature of water (or air) temperature heating device 5 (or 5') reaches the suitable temperature 40° C (or 104° F), or combustion in the engine 1, the power source of electric heating wire (or piece or pipe) can be automatically turned off to stop heating.

The portion of fuel pipe 7 of diesel engine 1, where is provided with the water (or air) temperature heating device 5 (or 5'), may be spiral (as shown in Figure 1) or zigzag (as shown in Figure 3) or lineal (as shown in Figure 2).

A closed heating cylinder 51 is provided to the exterior of said portion of fuel pipe 7 and connected in parallel to the water return pipe 31 of radiator 3 (as shown in Figure 1) or the exhaust pipeline 61 of exhaust pipe 6 (as shown in Figure 2). A self closing valve VS with a constant temperature switch S2 is provided to the connection thereof to control the opening and closing actions thereof at the constant temperature (namely st at 40° C or 104° F in general) so that when the temperature in the closed heating cylinder 51 is below the set constant temperature 40° C or 104° F, the self closing valve VS can keep an open state to let the hot water in the water return pipe 31 or the hot air in exhaust pipeline 61 flow through the closed heating cylinder 51; and when the temperature in the heating cylinder 51 is above the set constant temperature, the self closing valve VS is automatically closed through the control of constant temperature control switch S2 so as to stop the hot water or hot air flowing into the closed heating cylinder 51 and to cease heating the fuel pipe 7. Through such a repeatedly automatic action, after starting the engine 1, the temperature of input fuel from the fuel pipe 7 can be kept around the set temperature 40°C or 104°F so as to continuously acquire the fuel with a suitable temperature for combustion in the engine, smoothly run the engine, prevent the engine from stopping ignition, and enhance the horsepower of engine or reduce the rate of consumption of fuel (i.e. save fuel).

In view of the above, a diesel engine equipped with the heating device of the present invention can be easily started through the electric heating device 4 to heat the fuel in the fuel pipe 7 up to a suitable combustion temperature around 40°C or 104°F before starting the engine 1; and after starting the engine 1 for some time, namely, when the temperature in the heating cylinder 51 of water (or air) temperature heating device 5 (or 5') has risen to the said suitable combustion (explosion) temperature around 40°C, the power source of electric heating device 4 can be automatically turned off to stop the heating action; and then the hot water from the water return pipe 31 of radiator 3 or the hot air from the exhaust pipeline 61 of exhaust pipe 6 keeps continued preheating of fuel pipe for a constant temperature through the water (or air) temperature heating device 5 (or 5') so as to continuously keep the full fuel combustion (explosion). Therefore, it is easy to start and run the engine 1 smoothly, and can save fuel and enhance the horsepower of said engine 1.

## Claims

1. An internal combustion engine fuel heating device characterised by an electric heating element (4) for heating a fuel pipeline (7) so as to heat fuel therein; heat exchanger means (51) for receiving heat energy from the engine when running and transferring said energy to fuel in the pipeline (7); and means for initially operating the electric heating element (4) when the engine is cold and discontinuing operation of the element (4) when the fuel becomes heated by said heat exchanger means (51) upon running of the engine.

2. A device according to claim 1 wherein the heat exchanger means (51) is adapted to receive hot water from a cooling system of the engine.

3. A device according to claim 1 wherein the heat exchanger means (51) is adapted to receive hot gases from the exhaust of the engine.

4. A device according to any preceding claim including sensor means (51) operative to switch off said heating element (4) a given time after commencement of operation of the engine.

5. A device according to any preceding claim including means (VS, S2) for maintaining the heating of the fuel by said heat exchanger means (51) substantially constant.

6. A device according to any preceding claim installed on the fuel pipeline (7) of a diesel engine (1).

7. A diesel engine fuel pipeline heating device comprising:
an electric heating device provided to the exterior of fuel pipe nearby the engine; and
a water (or air) temperature heating device provided to the exterior of fuel pipe behind the electric heating device;
which is characterised in a diesel engine equipped with the heating device can be easily started through the heating device to heat the fuel in the fuel pipe up to a suitable combustion (explosion) temperature around 40°C (or 104°F) before starting the engine; and after starting the engine for some time, namely when the temperature in the heating cylinder of water (or air) temperature heating device has risen to the said suitable combustion (explosion) temperature around 40°C (or 104°F), the power source of electric heating device can be automatically turned off to stop the heating action; and then the hot water from the water return pipe of radiator or the hot air from the exhaust pipeline of exhaust pipe keeps continued preheating of fuel pipe for a constant temperature through the water (or air) temperature heating device so as to continuously keep the full fuel combustion (explosion), easily and smoothly start and run the engine, and enhance the horsepower of engine.

8. A diesel engine fuel pipeline heating device as claimed in claim 7, wherein the electric heating device is an electric heating wire (or piece or pipe) of which the inner and outer surfaces are covered with an insulating, chillproof and heatproof material, and an automatic constant temperature control switch is provided to the electric heating device.

9. A diesel engine fuel pipeline heating device as claimed in claim 7 wherein the portion of fuel pipe of diesel engine provided with the water (or air) temperature heating device may be spiral or zigzag or lineal pipeline.

10. A diesel engine fuel pipeline heating device as claimed in claim 7 wherein the housing of water (or air) temperature heating device is a closed heating cylinder and connected in parallel to the water return pipe of radiator or the exhaust pipeline of exhaust pipe, and a self closing valve with a constant temperature switch is provided to the connection thereof to control the opening and closing actions thereof.

FIG.1

FIG.2

FIG.3

European Patent Office

EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-8 903 478 (CROSSETT AND SON, INC.) * Page 3, lines 25-33; claims 1,4 * | 1,2,4,5,6 | F 02 M 31/02 F 02 M 31/125 |
| X | FR-A-2 598 464 (ANDRIGHETTI) * Abstract * | 1,2,7,9,10 | |
| Y | GB-A-2 058 920 (PIERARD) * Abstract; figure 1; page 2, lines 61-120 * | 1,7 | |
| Y | EP-A-0 225 260 (DEBEAUX) * Abstract; figure 1 * | 1,7 | |
| A | US-A-4 612 896 (LEIBRAND) * Abstract; figure 1 * | 3 | |
| A | US-A-4 606 320 (McGEE) * Column 2, lines 5-41; figure 2 * | 8 | |

TECHNICAL FIELDS SEARCHED (Int. Cl.5)

F 02 M

The present search report has been drawn up for all claims

| Place of search | Date of completion of the search | Examiner |
|---|---|---|
| THE HAGUE | 08-10-1990 | KLINGER T.G. |

EPO FORM 1503 03.82 (P0401)